Europäisches Patentamt

European Patent Office

Office européen des brevets

(19)

(11) **EP 1 083 717 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.[7]: **H04L 27/22**, H04B 10/148

(21) Anmeldenummer: **00118377.1**

(22) Anmeldetag: **24.08.2000**

(54) **Phasenreglung eines Lokaloszillators in einem kohärenten, optischen Homodynempfänger für PSK-Signale**

Phase control of a local oscillator in a coherent, optical, homodyne receiver for PSK signals

Contrôle de la phase d'un oscillateur local dans un récepteur cohérent, optique et homodyne pour signaux MDP

(84) Benannte Vertragsstaaten:
**CH DE FR GB IT LI**

(30) Priorität: **09.09.1999 DE 19943197**

(43) Veröffentlichungstag der Anmeldung:
**14.03.2001 Patentblatt 2001/11**

(73) Patentinhaber: **Deutsches Zentrum für Luft- und Raumfahrt e.V.**
**53175 Bonn (DE)**

(72) Erfinder: **David, Florian, Dipl.-Ing.**
**80636 München (DE)**

(74) Vertreter: **von Kirschbaum, Albrecht, Dipl.-Ing.**
**Patentanwalt,**
**Postfach 15 20**
**82102 Germering (DE)**

(56) Entgegenhaltungen:
**EP-A- 0 319 174          FR-A- 2 738 969**

• **GLATT ET AL: "Optical PSK homodyne system using a lswitched residual carrier for phase synchronisation" ELECTRONICS LETTERS , Bd. 32, Nr. 15, 18. Juli 1996 (1996-07-18), Seiten 1386-1387, XP000625439 Stevenage, GB ISSN: 0013-5194**

## Beschreibung

Die Erfindung betrifft ein Verfahren zur Übertragung von optischen PSK-Signalen mit einer empfangsseitig durchgeführten, für bandbreitenbegrenzte Modulationsimpulse geeigneten Phasensynchronisierung eines optischen Lokaloszillators in einem kohärent-optischen PSK(Phase Shift Keying)-Homodyn-Empfänger, bei dem das empfangene optische PSK-Signal mit der Schwingung des optischen Lokaloszillators zur unmittelbaren Bildung eines Mischprodukts im Basisband additiv überlagert wird und daraus im Basisband unter Verwendung eines dort rückgewonnenen Bittaktes mit der Bitdauer $T_b$ das sendeseitig mit PSK aufmodulierte digitale Datensignal detektiert wird.

Außerdem betrifft die Erfindung eine Einrichtung zur Durchführung dieses Verfahrens.

Die optische Übertragungstechnik gewinnt immer mehr an Bedeutung. Neben der vielfachen Anwendung in Glasfasernetzen wird sich auch die Freistrahlübertragung in den nächsten Jahren etablieren. Satellitennetze werden schon heute mit optischen Intersatellitenverbindungen (Cross Links) geplant. Hier wird der kohärente Überlagerungsempfang und speziell der hochempfindliche Homodyn-Empfang, bei welchem das Empfangssignal direkt ins Basisband hinuntergemischt wird, eine große Rolle spielen, da der Homodyn-Empfang die Übertragung sehr hoher Datenraten mit geringem Energieaufwand ermöglicht und im Gegensatz zu inkohärenten Verfahren gegen Einflüsse von Hintergrundlicht nahezu unempfindlich ist.

Die Mischung des Empfangssignals ins Basisband wird beim kohärent-optischen Homodyn-Empfänger durch eine additive Überlagerung der Empfangslichtwelle mit der Schwingung eines Lokaloszillators erreicht. Aufgrund der quadratischen Kennlinie der empfangenden Photodioden ergibt sich ein Mischprodukt im Basisband, wenn der Lokaloszillator (LO) in Frequenz und Phase mit der Trägerschwingung des Empfangslichts übereinstimmt. Um eine solche Synchronisation des Lokaloszillators zu erreichen, stehen momentan mehrere Verfahren zur Verfügung. Das bekannte Costas Loop-Verfahren (siehe beispielsweise J.P. Costas, "Synchronous Communications", Proc. IRE, Vol. 44, Nr. 12, Seiten 1713 bis 1718, 1956 und W. Leeb, "Coherent Optical Space Communications", in "Advanced Methods for Satellite and Deep Space Communications", Lecture Notes in Control and Information Sciences 182, Springer 1992) ist eine bewährte Technik aus der Funkübertragung; dieses Costas Loop-Verfahren weist in optischen Systemen jedoch den Nachteil auf, daß ein zweiter orthogonaler Empfängerzweig benötigt wird, wie er beispielsweise bei einer quaternären Phasenumtastung (QPSK) ohnehin benötigt wird, während er bei einer binären Phasenumtastung (BPSK) nicht benötigt wird. Das hierzu benötigte 90°-Hybrid ist ein sehr aufwendiges und entsprechend teures optisches Bauelement. Darüber hinaus entsteht durch die Aufspaltung der optischen Empfangsleistung im zweiten Empfängerzweig ein Verlust an Empfängerempfindlichkeit.

Das bekannte Restträgerverfahren ("Residual Carrier", siehe T.G. Hodgkinson, "Phase-Locked Loop Analysis for Pilot Carrier Coherent Optical Receivers" in "Electronics Letters", 21, Seiten 1202 bis 1203, 1985) benötigt zwingend eine Gleichstrom-Kopplung des Empfängers, da der übertragene Trägeranteil nur als Gleichanteil detektiert werden kann. Diese Forderung ist für hochratige Übertragungssysteme kaum einzuhalten, zumal in einem solchen Falle Datenraten im Bereich von mehreren Gigabit pro Sekunde angestrebt werden.

Aus DE 41 10 138 ist das sogenannte SyncBit-Verfahren bekannt, bei welchem bereits sendeseitig regelmäßig für die Dauer eines Synchronisationssymbols eine 90°-Drehung eingefügt wird, so daß das 90°-Hybrid im Empfänger überflüssig wird. Allerdings ist der Aufwand an Elektronik, insbesondere von schnellen Logikschaltungen, sehr hoch. Hierdurch wird eine hochratige Realisierung erschwert.

Das aus FR-A-2 738 969 und aus dem Aufsatz von Glatt et al.: "Optical PSK homodyne system using a switched residual carrier for phase synchronisation", Electronics Letters, Bd. 32, Nr. 15, 18. Juli 1996, Seiten 1386-1387, XP000625439 Stevenage, GB ISSN. 0013-5194 bekannte "Switched Residual Carrier"-Verfahren ähnelt dem vorstehend beschriebenen Restträgerverfahren; jedoch wird beim "Switched Residual Carrier"-Verfahren die Polarität des Trägeranteils nach einer halben Bitdauer umgeschaltet. Dadurch wird eine Gleichstrom-Kopplung unnötig und der Restträger kann durch ein erneutes Umschalten der Polarität in der Bitmitte vom Empfänger detektiert werden. Nachteilig bei diesem Verfahren wirkt sich jedoch aus, daß die benötigte Bandbreite steigt und sich dadurch sowie durch einen suboptimalen Modulationshub eine Verschlechterung des Signal-Störabstandes ergibt. Außerdem muß eine bewußte Veränderung des Sendesignals herbeigeführt werden, da sendeseitig bewußt und eigens ein Restträger zugefügt werden muß und dieser ebenso bewußt nach jeweils der halben Bitdauer eigens umzuschalten ist.

Wiederum ähnlich arbeitet ein in der deutschen Patentanmeldung DE 138 37 408.9-35 beschriebenes "Modulated Residual Carrier"-Verfahren. Bei diesem Verfahren wird sendeseitig der Modulationshub periodisch verändert oder ihm wird ein beliebiges Datensignal aufmoduliert. Auf diese Weise kann ein Subkanal implementiert werden und zugleich kann durch Auswerten der Hüllkurven des Empfangssignals eine Führungsgröße zur Phasenregelung des Lokaloszillators gewonnen werden. Auch bei diesem Verfahren führt wiederum ein suboptimaler Modulationshub im Hinblick auf den Signal-Störabstand zu Verlusten.

Zwei weitere, in der deutschen Patentanmeldung DE 198 37 409.7-35 beschriebene Verfahren beruhen auf einer Asymmetrie des Augenmusters im Empfänger. Diese Asymmetrie ergibt sich aufgrund von sendeseitigen Bandbegrenzungen, die in realen Systemen ohnehin vorhanden sind, aber auch bewußt eingefügt werden können, sowie einer Nichtlinearität, die ein wesentliches Merkmal einer Phasenmodulation in Kombination mit einem optischen Überlagerungsempfänger ist. Die Auswertung dieser Asymmetrie erfordert wiederum eine sehr schnelle Logikschaltung, was gerade bei einer hochratigen Realisierung zu Problemen führen kann.

Aufgabe der Erfindung ist es daher, ein Verfahren und eine Einrichtung anzugeben, mit welchen sich die Phasenlage der Schwingung eines optischen Lokaloszillators (LO) in einem kohärent-optischen PSK-Homodyn-Empfänger mit Hilfe von einfachen elektronischen Bauelementen und ohne eigens dafür vorzunehmenden senderseitigen Aufwand so regeln läßt, daß dadurch kein zusätzlicher Verlust eingeführt wird.

Gemäß der Erfindung wird diese Aufgabe bei einem Verfahren der eingangs genannten Art dadurch gelöst, daß sendeseitig nur das modulierte Signal und zwar ohne ein eigens für die empfangsseitige Phasensynchronisation verwendbares, zusätzliches Signal gesendet wird und daß empfangsseitig nach der Überlagerung des nur über einen einzigen optischen Empfangszweig empfangenen optischen Signals mit der Schwingung des optischen Lokaloszillators bei der Frequenz $1/T_b$ und deren Vielfachen entstehende Spektrallinien zur Gewinnung einer Führungsgröße für eine Phasenregelung des optischen Lokaloszillators ausgewertet werden.

Beim erfindungsgemäßen Verfahren werden spezielle Spektrallinien ausgewertet, die in einem Empfangssignal nach der Überlagerung mit der Schwingung des optischen Lokaloszillators auftreten und eine Information über den aktuellen Phasenfehler, also einen Phasenversatz zwischen der Referenzphase der Empfangslichtwelle und der Phasenlage der Schwingung des Lokaloszillators, liefern.

Vorteilhafte Ausgestaltungen des Verfahrens sind Gegenstand der auf den Anspruch 1 rückbezogenen Ansprüche 2 und 3.

Eine Realisierung des erfindungsgemäßen Verfahrens kann mit wenigen einfachen elektronischen Bauelementen in Analogtechnik erfolgen, welche sich für hochratige Realisierungen gut eignen. Im Gegensatz zu den meisten vorstehend angeführten bekannten Verfahren wird beim erfindungsgemäßen Verfahren kein zusätzlicher Verlust eingeführt. So werden auch keine aufwendigen Bauelemente, wie beispielsweise ein optischer 90°-Hybrid oder extrem schnelle Logikschaltungen benötigt. Ein Empfang einer PSK-Modulation mit geeigneter Signalraumzuordnung, wie beispielsweise BPSK, ist mit einem einzigen Empfängerzweig möglich.

Das erfindungsgemäße Verfahren würde allerdings nicht funktionieren, wenn sendeseitig bei der Modulation ideale Rechteckimpulse eingesetzt werden. Da jedoch in realen, insbesondere hochratigen Systemen stets Bandbegrenzungen durch nichtideale Bauelemente, wie z.B. Treiberverstärker oder Phasenmodulatoren, auftreten und damit allein schon aus diesem Grund keine idealen Rechteckimpulse gesendet werden können, ist hierin jedoch kein Nachteil zu sehen.

Eine die gestellte Aufgabe lösende Einrichtung zur Durchführung dieses neuen Verfahrens ist im Anspruch 4 angegeben. Vorteilhafte und zweckmäßige Weiterbildungen davon sind Gegenstand der auf den Anspruch 4 unmittelbar oder mittelbar rückbezogenen Ansprüche 5 bis 11.

Nachfolgend wird die Erfindung anhand von Zeichnungen im einzelnen erläutert. Es zeigen:

Fig.1 ein Leistungsdichtespektrum eines Empfangssignals ohne Phasenfehler;

Fig.2 ein Leistungsdichtespektrum eines Empfangssignals mit einem statischen Phasenfehler von 0,5 rad;

Fig.3a und 3b Imaginär- bzw. Realteil einer Spektrallinie bei einer Frequenz f = $1/T_b$ in Abhängigkeit vom Phasenfehler in rad;

Fig.4a ein rauschfreies Empfangssignal vor einem Detektionsfilter;

Fig.4b einen Bittakt in Form einer harmonischen Schwingung, und

Fig.5 ein Blockschaltbild eines BPSK-Homodyn-Übertragungssystems mit Überlagerungsempfänger und Fehlersignalgewinnung zur Durchführung des Verfahrens nach der Erfindung.

Allgemein formuliert lautet ein Empfangssignal r(t):

$$r(t) = \sin[\tfrac{\pi}{2} \cdot m \cdot \varphi(t) + \Delta\varphi] = \sin[\tfrac{\pi}{2} \cdot m \cdot \varphi(t)] \cdot \cos(\Delta\varphi) + \cos[\tfrac{\pi}{2} \cdot m \cdot \varphi(t)] \cdot \sin(\Delta\varphi),$$

wobei mit $\varphi(t)$ ein Sendesignal, mit $m$ der Modulationshub der Phasenmodulation und mit $\Delta\varphi$ ein auftretender Phasenfehler bezeichnet sind. Zur Vereinfachung der Darstellung ist an dieser Stelle auf eine komplexe Schreibweise verzichtet worden.

Für das Sendesignal $\varphi(t)$ gilt:

$$\varphi(t) = u(t)^{\star}g(t),$$

wobei u(t) ein bipolares Datensignal und g(t) eine sendeseitig verwendete Impulsform ist. Im Falle einer binären Phasenumtastmodulation (BPSK) kann das bipolare Datensignal u lediglich die Werte +1 und -1 annehmen. Das erfindungsgemäße Verfahren eignet sich auch für ein Zusammenarbeiten mit höherstufigen Modulationsverfahren; für eine einfache Beschreibung wird im folgenden jedoch nur die BPSK-Modulation in Betracht gezogen.

Werden ideale Rechteckimpulse gesendet, ist also die sendeseitig verwendete Impulsform g(t) rechteckförmig, so ergibt sich auch für das Empfangssignal r(t) wieder ein Rechtecksignal. Eine Abhängigkeit von sin($\Delta\varphi$) tritt nicht auf. Weicht die sendeseitig verwendete Impulsform g(t) allerdings von der Rechteckform ab, so entsteht im Empfänger ein Spektrum, welches analytisch selbst mit großem Aufwand kaum berechenbar ist.

Der hierbei eintretende Effekt kann jedoch unter der Annahme, daß $\varphi(t)$ eine harmonische Schwingung mit der Frequenz = $0,5/T_b$ ($T_b$ ist die Bitdauer der zu übertragenden digitalen Daten) ist, anschaulich dargestellt werden. Für das Empfangssignal r(t) ergibt sich dann:

$$r(t) = 2 \cdot \cos(\Delta\varphi) \cdot \sum_{l=1}^{\infty} J_{2l-1}\left(\frac{\pi}{2} \cdot m\right) \cdot \sin\left[2\pi \frac{(2l-1)}{2T_b} \cdot t\right] + \sin(\Delta\varphi) \cdot \left\{ J_0\left(\frac{\pi}{2} \cdot m\right) + 2 \cdot \sum_{k=1}^{\infty} J_{2k}\left(\frac{\pi}{2} \cdot m\right) \cdot \cos\left[2\pi \frac{k}{T_b} t\right]\right\}.$$

Am zweiten Summanden erkennt man, daß bei der Frequenz $1/T_b$ und deren Vielfachen Spektrallinien auftreten, deren Höhe von sin($\Delta\varphi$) abhängt.

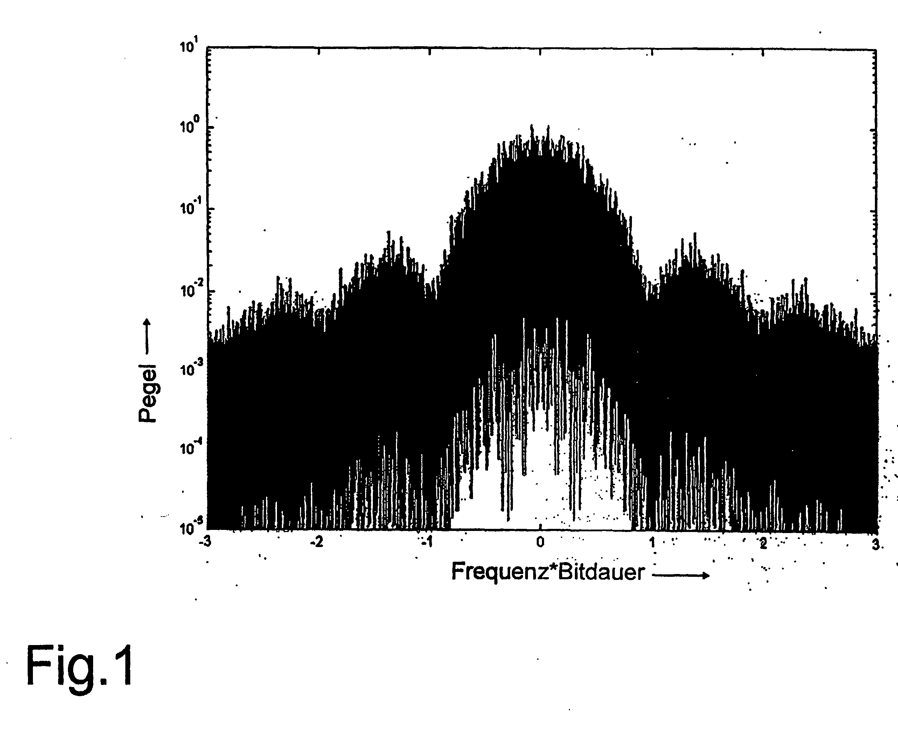

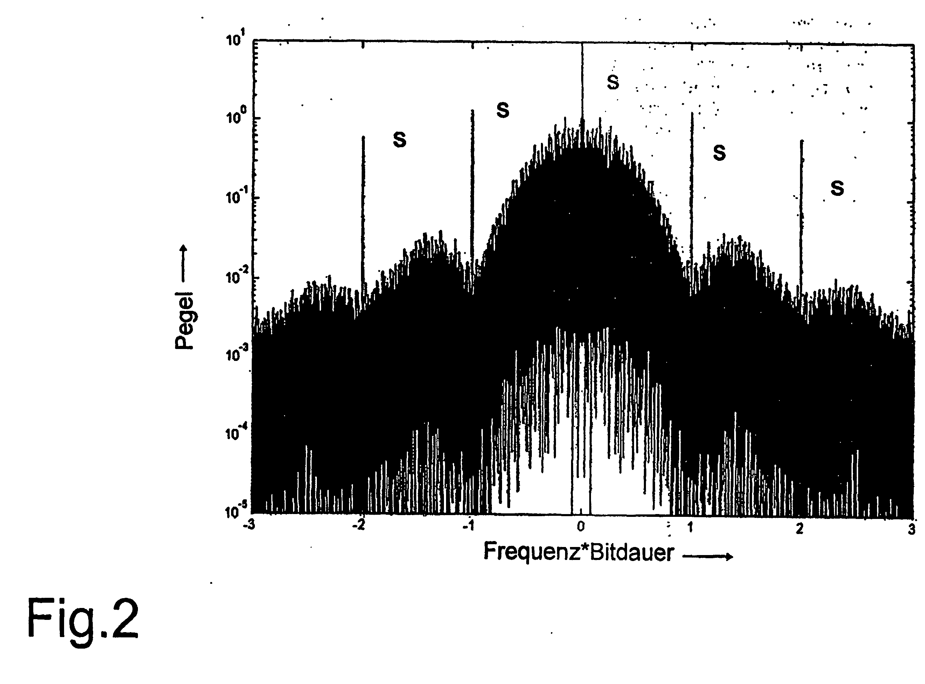

Wird für das Sendesignal $\varphi(t)$ nicht eine harmonische Schwingung, sondern ein zufälliges Datensignal mit nicht rechteckiger Impulsformung angenommen, so bleiben diese Linien erhalten. Die Abbildungen eines entsprechenden Leistungsspektrums ohne Phasenfehler in Fig.1 bzw. mit einem Phasenfehler in Fig.2, dort mit einem statischen Phasenfehler von 0,5 rad, verdeutlichen dies. Im Leistungsspektrum der Fig.2 sind im Gegensatz zu demjenigen der Fig.1 in regelmäßigen Frequenzabständen von $1/T_b$ Spektrallinien S vorhanden. Wird das Empfangssignal r(t) mit einem Filter gefiltert, das speziell diese Spektrallinien durchläßt, und wird dann die Leistung am Ausgang dieses Filters gemessen, so wird eine Information über den Betrag des Phasenfehlers, jedoch noch.keine Information über dessen Vorzeichen erhalten.

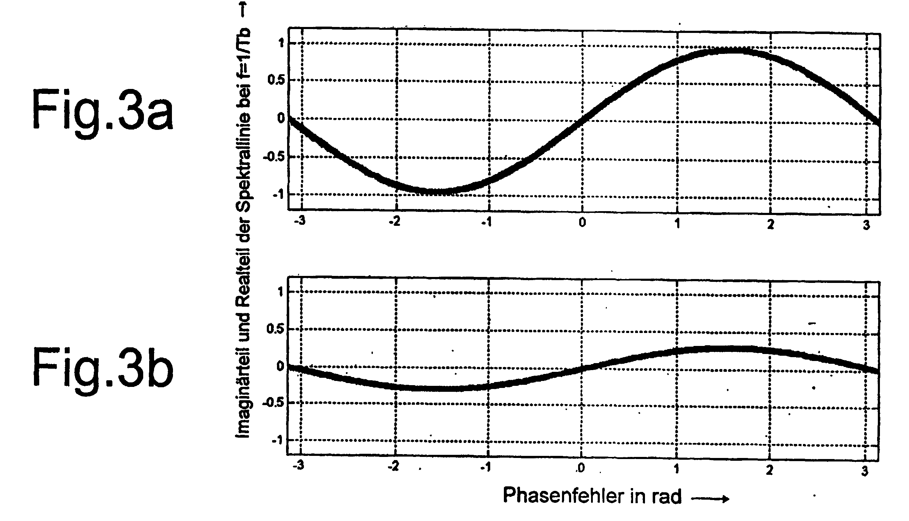

Wird nunmehr das komplexe Fourierspektrum des Empfangssignals r(t) näher untersucht, so erkennt man sowohl im Realals auch im Imaginärteil der Spektrallinien der Frequenz $k/T_b$ mit k = 1,2,3... eine Abhängigkeit von sin($\Delta\varphi$). Für deren Realteil ist der sinusförmige Verlauf in Fig.3a und für den Imaginärteil ist der Verlauf in Fig.3b dargestellt, wobei jeweils auf der Ordinate Imaginärteil bzw. Realteil einer Spektrallinie bei $f = 1/T_b$ und auf der Abszisse jeweils der Phasenfehler in rad aufgetragen sind. Diese Abhängigkeit von sin($\Delta\varphi$) kann durch eine Synchrondemodulation ausgewertet werden, wobei hierzu eine Referenzschwingung der Frequenz $1/T_b$ oder von deren Vielfachen mit festgelegter Phasenlage benötigt wird.

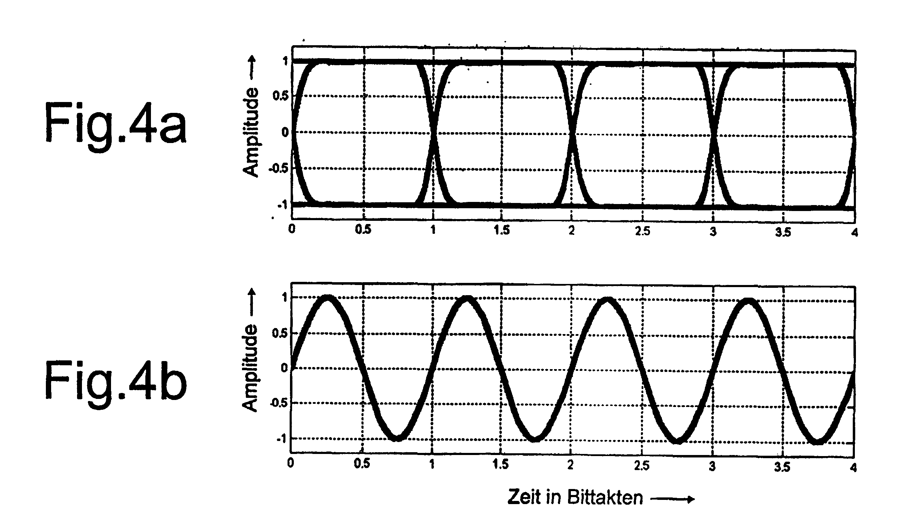

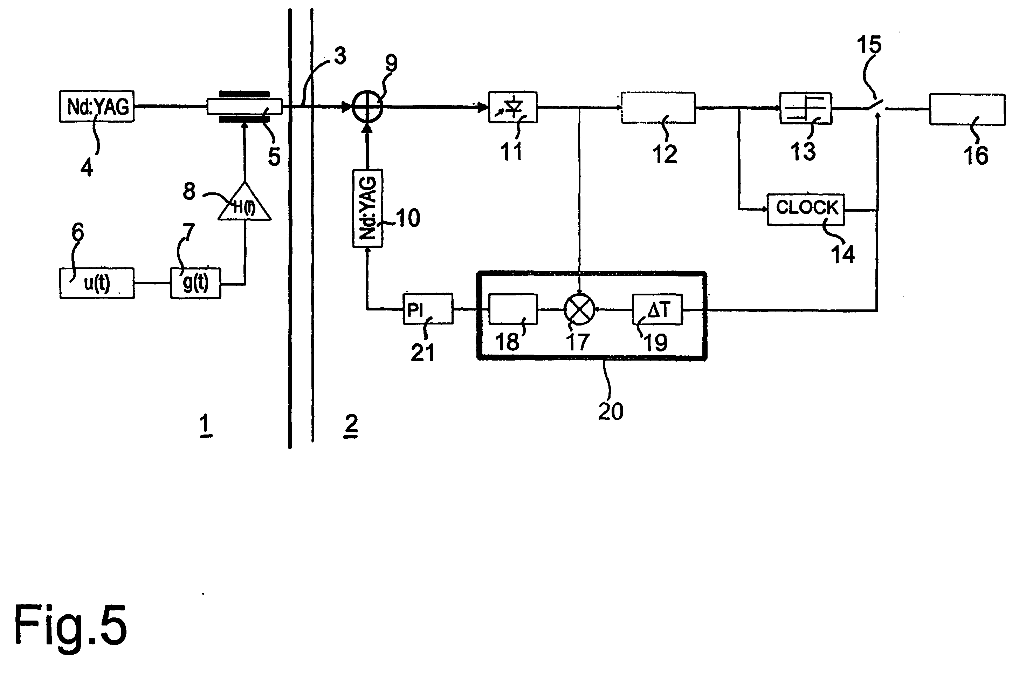

Eine derartige Schwingung wird beispielsweise in der Taktrückgewinnung (siehe im später noch anhand der Fig.5 beschriebenen Einrichtungsbeispiel der Block 10 zur Taktrückgewinnung) erzeugt, die zur Datenentscheidung im Empfänger ohnehin notwendig ist. Hierbei spielt es keine Rolle, ob der Bittakt als harmonische Schwingung oder als ein Rechtecksignal vorliegt, da die Phasenfehlerinformation auch in den Spektrallinien der Frequenz $k/T_b$ mit k = 3,5,7 bzw. k = 4,6,8... vorhanden ist. Hierzu sind in Fig.4a ein mögliches Augenmuster im Empfänger für ein Empfangssignal ohne Rauschen (vor einem Detektionsfilter) und in Fig.4b der wiedergewonnene, auf der Abszisse aufgetragene Bittakt jeweils gegenüber der Amplitude auf der Ordinate wiedergegeben.

Zur Erzielung einer Synchrondemodulation wird ein empfangenes Signal mit einer Referenzschwingung multipliziert und entstehende Spektralanteile bei Vielfachen der Frequenz der Referenzschwingung werden durch eine Filterung, beispielsweise mit Hilfe eines Tiefpaßfilters, unterdrückt. Hierbei können die auszuwertende Schwingung und die Referenzschwingung allerdings eine Phasendifferenz aufweisen.

Um optimale Ergebnisse zu erzielen, muß daher entweder das die Referenzschwingung bildende Taktsignal oder das empfangene Signal so verzögert werden, daß diese Phasendifferenz kompensiert wird. Auf diese Weise wird die für eine einwandfreie Synchrondemodulation erforderliche Phasenfehlerinformation mit Vorzeichen im Basisband erhalten. Hierbei ist es unerheblich, ob das empfangene Signal bereits mit einem Detektionsfilter gefiltert wurde oder nicht, solange das Detektionsfilter nicht bei den Frequenzen $k/T_b$ mit k = 1,2,3... Nullstellen aufweist.

Nach dem erfindungsgemäßen Verfahren wird somit in besonders vorteilhafter Weise das den optischen Lokaloszillator phasenmäßig steuernde Phasenfehlersignal durch elektrische Multiplikation (Mischung) des empfangenen, in elektrische Form umgewandelten Signals mit dem geeignet verzögerten Bittakt und einer anschließenden elektrischen Tiefpaßfilterung gewonnen.

Dabei ist zu beachten, daß auch der Regelkreis an sich bereits eine Tiefpaßwirkung äufweist, so daß ein gesonderter Tiefpaß nicht unbedingt erforderlich ist.

Anhand von Fig.5 wird nachfolgend ein in einem Blockschaltbild wiedergegebenes PSK-Homodyn-Übertragungssystem im einzelnen beschrieben.

Das in Fig.5 dargestellte Übertragungssystem setzt sich aus einer Senderseite 1 und einer Empfängerseite 2 zusammen, zwischen denen sich ein optischer Übertragungsweg 3 in Form einer Glasfaser oder ein Freistrahlungsübertragungsweg befindet. Auf der Senderseite 1 ist als optische Lichtquelle ein Sendelaser 4 in Form eines Neodym-YAG-Lasers vorgesehen, dessen Laserstrahl einen optischen Phasenmodulator 5 durchläuft und danach auf den optischen Übertragungsweg 3 gelangt.

Im elektrischen Modulationssignalweg ist am Anfang eine digitale Signalquelle 6 vorgesehen, in der unter Verwendung eines bestimmten Bittaktes ein bipolares Datensignal $u(t)$ erzeugt wird, das danach einem Impulsformer 7 zugeführt wird, wobei $g(t)$ eine sendeseitig verwendete Impulsform ist. Im Anschluß an den Impulsformer 7 enthält der Modulationssignalweg einen Treiberverstärker 8 mit der Übertragungsfunktion $H(f)$. Das verstärkte und nicht mehr rechteckförmige digitale Modulationssignal wird als Steuersignal dem optischen Phasenmodulator 5 zugeführt, so daß dort eine dem digitalen Datensignal entsprechende BPSK-Modulation der optischen Schwingung des Sendelasers 4 stattfinden kann.

Das nach der Übertragung über den optischen Übertragungsweg 3 auf der Empfängerseite 2 ankommende BPSK-modulierte Lichtwellensignal wird einem Eingang eines optischen Kopplers 9 zugeführt, an dessen anderen Eingang die Schwingung eines Lokaloszillators 10 gelangt. In einem empfangenden Frontend 11, das aus einer Frontend-Photodiode und einem nachgeordneten, im einzelnen in Fig.5 nicht dargestellten Verstärker besteht, wird aufgrund dessen quadratischer Kennlinie aus den beiden im optischen Koppler 9 additiv überlagerten Signalen ein Mischprodukt in elektrischer Signalform gebildet.

Dieses elektrische Signal wird dann zur Basisbandbegrenzung einem Detektionsfilter 12 zugeführt, das bei entsprechender Bandbegrenzung durch das Frontend 11 auch weggelassen werden kann. Das bandbegrenzte Signal wird dann einem Entscheider 13 zugeleitet, zu dessen Funktionsfähigkeit eine Wiedergewinnung des Bittaktes des Datensignals der Sendeseite erforderlich ist. Diese Bittakt- Wiedergewinnung erfolgt aus dem empfangenen Signal in einer Bittakt-Rückgewinnungsschaltung 14, die einen Abtaster 15 steuert.

Das so demodulierte und verarbeitete Empfangssignal läßt sich nachfolgend in einer digitalen Datensignalsinke 16 als Datensignal verwerten, das im korrekt wiedergegebenen Zustand dem sendeseitig eingegebenen Datensignal $u(t)$ entspricht. Von wesentlicher Bedeutung ist, daß die Phasenlage des optischen Lokaloszillators 10 auf der Empfängerseite 2 so geregelt wird, daß eine synchrone Demodulation des über den optischen Übertragungsweg 3 empfangenen BPSK-Signals durchgeführt wird.

Zu diesem Zweck wird das der Frontend-Photodiode 11 entnommene empfangene Signal in einer elektrischen Mischstufe 17 mit einer Referenzschwingung multipliziert, die dem in der Bittakt-Rückgewinnungsschaltung 14 wiedergewonnenen Bittakt entspricht. Dort entstehende Spektralanteile mit Vielfachen der Bittaktfrequenz werden mit Hilfe eines Tiefpasses 18 unterdrückt. Zum Ausgleich einer möglicherweise vorhandenen Phasendifferenz zwischen der durch den Bittakt gebildeten Referenzschwingung und der auszuwertenden Schwingung, die beide der elektrischen Mischstufe zugeführt werden, wird im Ausführungsbeispiel das von der Bittakt-Rückgewinnungsschaltung 14 zugeführte Bittaktsignal mittels einer einstellbaren Verzögerungseinrichtung 19 so verzögert, daß diese Phasendifferenz kompensiert wird.

Genauso gut könnte anstelle davon eine Verzögerungseinrichtung dem anderen Eingang der Mischstufe vorgeschaltet werden, so daß das empfangene passend verzögert wird. Auf diese Weise wird die Phasenfehlerinformation mit Vorzeichen im Frequenzband erhalten. Das die Phasenfehlerinformation enthaltende Phasenfehlersignal, das durch Multiplikation des empfangenen Signals mit dem verzögerten Bittakt gewonnen wird und dem Ausgang der durch die Mischstufe 17, den Tiefpaß 18 und die Verzögerungseinrichtung 19 gebildeten Fehlersignal-Gewinnungseinrichtung 20 entnommen wird, wird dann über einen PI-Regler 21 dem Phasen- und Frequenzsteuereingang des optischen Lokaloszillators 10 zur synchronisierenden Phasennachstellung zugeführt.

Eine Auswertung der die Phasenfehlerinformation tragenden Spektrallinien ist auch möglich, wenn das Empfangssignal den Entscheider 13 bereits durchlaufen hat und in binärer, aber vom Abtaster 15 noch nicht abgetasteter Form vorliegt. Daraus ergibt sich die Möglichkeit einer digitalen Verarbeitung. Die Mischung der Signale kann durch eine Exklusiv-ODER-Verknüpfung anstelle der elektrischen Mischstufe 17 ersetzt werden. Voraussetzung ist hierbei wiederum, daß, wie bereits erwähnt, das Detektionsfilter 12 keine Nullstellen bei den Frequenzen $k/T_b$ mit $k = 1,2,3...$ aufweist.

**Bezugszeichenliste**

1    Senderseite

| | |
|---|---|
| 2 | Empfängerseite |
| 3 | Optischer Übertragungsweg |
| 4 | Sendelaser |
| 5 | Optischer Phasenmodulator |
| 6 | Digitale Datensignalquelle |
| 7 | Impulsformer |
| 8 | Treiberverstärker |
| 9 | Optischer Koppler |
| 10 | Lokaloszillator |
| 11 | Frontend mit Photodiode und Verstärker |
| 12 | Detektionsfilter |
| 13 | Entscheider |
| 14 | Bittakt-Rückgewinnungsschaltung |
| 15 | Abtaster |
| 16 | Digitale Datensignalsinke |
| 17 | Elektrische Mischstufe |
| 18 | Tiefpaß |
| 19 | Verzögerungseinrichtung |
| 20 | Fehlersignal-Gewinnungseinrichtung |
| 21 | Regler |
| S | Spektrallinie |

## Patentansprüche

1. Verfahren zur Übertragung von optischen PSK-Signalen mit einer empfangsseitig durchgeführten, für bandbreitenbegrenzte Modulationsimpulse geeigneten Phasensynchronisierung eines optischen Lokaloszillators (10) in einem kohärent-optischen PSK, Phase Shift Keying,-Homodyn-Empfänger (2), bei dem das empfangene optische PSK-Signal mit der Schwingung des optischen Lokaloszillators zur unmittelbaren Bildung eines Mischprodukts im Basisband additiv überlagert wird und daraus im Basisband unter Verwendung eines dort rückgewonnenen Bittaktes mit der Bitdauer $T_b$ das sendeseitig mit PSK aufmodulierte digitale Datensignal detektiert wird, **dadurch gekennzeichnet, daß** sendeseitig nur das modulierte Signal und zwar ohne ein eigens für die empfangsseitige Phasensynchronisation verwendbares, zusätzliches Signal gesendet wird und daß empfangsseitig nach der Überlagerung des nur über einen einzigen optischen Empfangszweig empfangenen optischen Signals mit der Schwingung des optischen Lokaloszillators (10) bei der Frequenz $1/T_b$ und deren Vielfachen entstehende Spektrallinien zur Gewinnung einer Führungsgröße für eine Phasenregelung des optischen Lokaloszillators ausgewertet werden.

2. Verfahren nach Anspruch 1, **dadurch gekennzeichnet, daß** die empfangsseitige Auswertung der betreffenden Spektrallinien durch elektrische Mischung des sich nach der Überlagerung mit der Lokaloszillatorschwingung ergebenden elektrischen Empfangssignals mit einer als Referenzschwingung herangezogenen Schwingung, deren Frequenz derjenigen des Bittaktes oder einem Vielfachen der Frequenz des Bittaktes entspricht, und eine anschließende Tiefpaß-Filterung des elektrischen Mischergebnisses vorgenommen wird, welches als Phasenfehlersignal dem optischen Lokaloszillator zur Phasenregelung zugeführt wird und daß zur Optimierung des Phasenfehlersignals entweder das sich nach der Überlagerung mit der Lokaloszillatorschwingung im Empfänger (2) ergebende elektrische Empfangssignal oder die als Referenzschwingung herangezogene Schwingung, deren Frequenz also derjenigen des Bittaktes oder einem Vielfachen davon entspricht, verzögert werden und zwar in einem solchen Maße, daß eine Phasendifferenz zwischen dem elektrischen Empfangssignal und der Referenzschwingung gerade kompensiert wird.

3. Verfahren nach Anspruch 1, **dadurch gekennzeichnet, daß** zur empfangsseitigen Auswertung der Spektrallinien zum einen das sich nach der Überlagerung mit der Lokaloszillatorschwingung im Empfänger (2) ergebende elektrische Empfangssignal in binärer, aber noch nicht abgetasteter Form und zum anderen das im Empfänger (2) vorliegende Bittaktsignal in binärer Form verwendet werden, daß die elektrische Mischung durch eine Exklusiv-ODER-Verknüpfung dieser beiden, in diesem Falle digital vorliegenden Signale ausgeführt wird und daß zur Optimierung des Phasenfehlersignals entweder das sich nach der Überlagerung mit der Lokaloszillatorschwingung im Empfänger (2) ergebende elektrische Empfangssignal oder die als Referenzschwingung herangezogene Schwingung, deren Frequenz also derjenigen des Bittaktes oder einem Vielfachen davon entspricht, verzögert werden und zwar in einem solchen Maße, daß eine Phasendifferenz zwischen dem elektrischen Empfangssignal und der Referenzschwingung gerade kompensiert wird.

4. Einrichtung zur Durchführung des Verfahrens nach Anspruch 1, mit einem Empfänger (2) wobei eingangsseitig ein optischer Koppler (9) vorgesehen ist, dem zur additiven Überlagerung zum einen das aus einem einzigen optischen Übertragungsweg (3) empfangene optische PSK-Signal und zum anderen die optische Schwingung eines optischen Lokaloszillators (10) zugeführt wird, wobei der Ausgang des optischen Kopplers mit einem nur eine Photodiode enthaltenden Frontend (11) optisch verbunden ist, an welches ausgangsseitig ein Entscheider (13) mit nachfolgendem Abtaster (15) angeschlossen ist, der von einer Bittakt-Rückgewinnungsschaltung (14) gesteuert ist, wobei sich an den Abtaster eine digitale Datensignalsinke (16) anschließt, an welcher die demodulierten digitalen Datensignale abgenommen werden, und wobei das Frontend (11) elektrisch außerdem mit dem ersten Eingang einer elektrischen Mischstufe (17) verbunden ist, an deren zweiten Eingang der zurückgewonnene Bittakt aus der Bittakt-Rückgewinnungseinrichtung (14) geführt ist und deren Ausgang mit dem Frequenz- und Phasensteuereingang des optischen Lokaloszillators (10) verbunden ist und einen Regler (21), der zwischen dem Ausgang der elektrischen Mischstufe (17) und dem Frequenz- und Phasensteuereingang des optischen Lokaloszillators (10) angeordnet ist.

5. Einrichtung nach Anspruch 4, wobei in der Verbindung zwischen der Bittakt-Rückgewinnungsschaltung (14) und dem zweiten Eingang der elektrischen Mischstufe (17) eine einstellbare oder geregelte Verzögerungseinrichtung (19) eingeschaltet ist.

6. Einrichtung nach Anspruch 4, wobei in der Verbindung zwischen dem Frontend (11) und dem ersten Eingang der elektrischen Mischstufe (17) eine einstellbare oder geregelte Verzögerungseinrichtung eingeschaltet ist.

7. Einrichtung nach einem der Ansprüche 4 bis 6, wobei das Frontend (11) basisbandbegrenzend ausgelegt ist.

8. Einrichtung nach einem der Ansprüche 4 bis 6, wobei zur Basisbandbegrenzung zwischen dem Frontend (11) und dem Entscheider (13) ein Detektionsfilter (12) eingeschaltet ist.

9. Einrichtung nach einem der Ansprüche 4 bis 8, wobei zwischen dem Mischer (17) und dem Regler (21) ein Tiefpaß (18) vorgesehen ist.

10. Einrichtung nach einem der Ansprüche 4 bis 9, wobei der Regler (21) ein PI-Regler ist.

11. Einrichtung nach einem der Ansprüche 4 bis 10, wobei der frequenz- und phasenmäßig steuerbare optische Lokaloszillator (10) ein Neodym-YAG-Laser ist.

**Claims**

1. A method for communicating optical PSK signals comprising phase synchronization of an optical local oscillator (10) in a coherent-optical phase shift keying (PSK) homodyne receiver (2) implemented at the receiving end, suitable for bandwidth-limited modulation pulses, wherein the received optical PSK signal is additively combined with the oscillation of said optical local oscillator for directly forming a mix product in the baseband and detecting therefrom the digital data signal PSK modulated at the transmitting end in the baseband in making use of a bit clock recovered there having the bit duration $T_b$, **characterized in that** at the transmitting end only the modulated signal is transmitted, i.e. without any additional signal used separately for phase synchronization at the receiving end, and that at the receiving end, following combination of the optical signal received solely via a single optical receiver branch with the oscillation of said optical local oscillator (10), and that the spectral lines resulting at the frequency $1/T_b$ and multiples thereof are analyzed to obtain a command variable for phase-locking said optical local oscillator.

2. The method as set forth in claim 1, **characterized in that** analyzing the corresponding spectral lines at the receiving end is done by electrically mixing the electrical receiver signal resulting from combination with the oscillation of the local oscillator with an oscillation used as the reference oscillation, whose frequency corresponds to that of the bit clock or a multiple of the frequency of the bit clock, followed by low-pass filtering of the electrical result of the mix which is applied as the phase error signal to said optical local oscillator for phase-locking and that for optimizing said phase error signal either the electrical receiver signal resulting from combination with said local oscillator oscillation in said receiver (2) or the oscillation used as said reference oscillation, whose frequency corresponds to that of said bit clock or a multiple thereof, is delayed such that any phase difference between said electrical receiver signal and said reference oscillation is just compensated.

3. The method as set forth in claim 1, **characterized in that** for analyzing said spectral lines at the receiving end use is made, for one thing, of said electrical receiver signal resulting from the combination with said local oscillator oscillation in said receiver (2) in binary form but still to be sampled, and, for another, said bit clock signal available in said receiver (2) in binary form, that the electrical mixing is implemented by an exclusive OR logic combination of these two signals, available in this case digitally, and that for optimizing said phase error signal either the electrical receiver signal resulting from combination with said local oscillator oscillation in said receiver (2) or the oscillation used as said reference oscillation, whose frequency corresponds to that of said bit clock or a multiple thereof, is delayed such that any phase difference between said electrical receiver signal and said reference oscillation is just compensated.

4. A means for implementing the method as set forth in claim 1 comprising a receiver (2), whereby at the receiving end an optical coupler (9) is provided, to which for additive combination, for one thing, an optical PSK signal received from a sole optical communications link (3) and, for another, the optical oscillation of an optical local oscillator (10) is applied, the output of the optical coupler being optically coupled to a front end (11) containing but a single photodiode and to the output end of which a decider (13) followed by a sampler (15) is connected which is controlled by a bit clock recovery circuit (14), said sampler being followed by a digital data signal sink (16) from which the demodulated signal data signals are obtained and said front end (11) being additionally connected electrically to the first input of an electrical mixer stage (17), to the second input of which the recovered bit clock is supplied from said bit clock recovery circuit (14) and whose output is connected to the frequency and phase control input of said optical local oscillator (10), and a controller (21) disposed between the output of said electrical mixer stage (17) and the frequency and phase control input of said optical local oscillator (10).

5. The means as set forth in claim 4, wherein in the connection between said bit clock recovery circuit (14) and the second input of said electrical mixer stage (17) a variable or controlled delay member (19) is inserted.

6. The means as set forth in claim 4, wherein in the connection between said front end (11) and the first input of said electrical mixer stage (17) a variable or controlled delay member (19) is inserted.

7. The means as set forth in any of the claims 4 to 6, wherein said front end (11) is devised baseband limiting.

8. The means as set forth in any of the claims 4 to 6, wherein for baseband limiting a detection filter (12) is inserted between said front end (11) and said decider (13).

9. The means as set forth in any of the claims 4 to 8, wherein between said electrical mixer stage (17) and said controller (21) a low-pass (18) is provided.

10. The means as set forth in any of the claims 4 to 9, wherein said controller (21) is a PI controller.

11. The means as set forth in any of the claims 4 to 10, wherein said optical local oscillator (10) controllable in frequency and phase is an Neodym YAG laser.

**Revendications**

1. Procédé pour la transmission de signaux optiques à modulation de phase (MDP) avec une synchronisation de phase, réalisée du côté réception et adaptée pour des impulsions de modulation limitées en largeur de bande, d'un oscillateur optique local (10) dans un récepteur cohérent optique et homodyne pour signaux MDP (2), dans lequel le signal optique MDP reçu est superposé de manière additionnelle à l'oscillation de l'oscillateur optique local pour la formation directe d'un produit de mélange dans la bande de base, et dans lequel le signal de données digital, qui est soumis du côté réception à une modulation par des signaux MDP, est détecté à partir de ce produit dans la bande de base en utilisant un rythme de bits qui y est récupérée et qui a la durée de bit $T_b$, **caractérisé en ce que** du côté émission seul le signal modulé est émis, c'est-à-dire sans un signal supplémentaire utilisable spécialement pour la synchronisation de phase du côté réception, et **en ce que** du côté réception, après la superposition du signal optique, qui est reçu seulement par l'intermédiaire d'une seule voie de réception optique, à l'oscillation de l'oscillateur optique local (10), des lignes spectrales engendrées à la fréquence $1/T_b$ et ses multiples sont exploitées pour l'obtention d'une valeur de consigne pour une régulation de phase de l'oscillateur optique local.

2. Procédé selon la revendication 1, **caractérisé en ce que** l'exploitation du côté réception des lignes spectrales correspondantes a lieu par un mélange électrique du signal électrique de réception, qui apparaît après la superposition à l'oscillation de l'oscillateur local, avec une oscillation utilisée comme oscillation de référence et dont la fréquence correspond à celle du rythme de bit ou à un multiple de la fréquence du rythme de bit et par un filtrage passe-bas subséquent du résultat du mélange électrique, lequel résultat est amené à l'oscillateur optique local en tant que signal de défaut de phase pour la régulation de phase, et **en ce que**, pour l'optimisation du signal de défaut de phase, soit le signal électrique de réception apparaissant dans le récepteur (2) après la superposition à l'oscillation de l'oscillateur local soit l'oscillation utilisée comme oscillation de référence et dont la fréquence correspond par conséquent à celle du rythme de bit ou à un multiple de celle-ci sont retardés, et ceci dans une telle mesure qu'une différence de phase entre le signal électrique de réception et l'oscillation de référence soit juste compensée.

3. Procédé selon la revendication 1, **caractérisé en ce que**, pour l'exploitation côté réception des lignes spectrales, on utilise d'une part le signal électrique de réception obtenu dans le récepteur (2) après la superposition à l'oscillation de l'oscillateur local sous une forme binaire mais non encore échantillonnée et d'autre part le signal de rythme de bit présent dans le récepteur (2) sous une forme binaire, **en ce que** le mélange électrique est réalisé par une combinaison de type OU exclusif de ces deux signaux existant dans ce cas sous une forme digitale et **en ce que**, pour une optimisation du signal de défaut de phase, soit le signal électrique de réception obtenu dans le récepteur (2) après la superposition à l'oscillation de l'oscillateur local soit l'oscillation utilisée comme oscillation de référence, dont la fréquence correspond par conséquent à celle du rythme de bit ou à un multiple de celle-ci, sont retardés, et ceci dans une telle mesure qu'une différence de phase entre le signal électrique de réception et l'oscillation de référence soit juste compensée.

4. Dispositif pour la réalisation du procédé selon la revendication 1 avec un récepteur (2), avec lequel un coupleur optique (9), auquel est amené pour une superposition additive d'une part le signal optique MDF reçu par une seule voie de transmission optique (3) et d'autre part l'oscillation optique d'un oscillateur optique local, est prévu du côté entrée, avec lequel la sortie du coupleur optique fait l'objet d'une liaison optique avec un circuit d'entrée (11) ne comprenant qu'une photodiode et auquel est raccordé côté sortie un comparateur (13) suivi d'un échantillonneur (15), qui est commandé par un circuit de récupération de rythme de bit (14), avec lequel l'échantillonneur est suivi d'un abaisseur digital de signaux de données (16), sur lequel sont repris les signaux de données digitaux démodulés et avec lequel le circuit d'entrée (11) fait en outre l'objet d'une liaison électrique avec la première entrée d'un étage mélangeur électrique (17), à la deuxième entrée duquel est amenée le rythme de bit récupéré provenant du circuit de récupération de rythme de bit (14) et dont la sortie est reliée avec l'entrée de commande de fréquence et de phase de l'oscillateur optique local (10), et avec un régulateur (21) qui est disposé entre la sortie de l'étage mélangeur électrique (17) et l'entrée de commande de fréquence et de phase de l'oscillateur optique local (10).

5. Dispositif selon la revendication 4, dans lequel, dans la liaison entre le circuit de récupération de rythme de bit (14) et la deuxième entrée de l'étage mélangeur électrique (17) est placé un dispositif de temporisation réglable ou régulé (19).

6. Dispositif selon la revendication 4, dans lequel, dans la liaison entre le circuit d'entrée (11) et la première entrée de l'étage mélangeur électrique (17) est placé un dispositif de temporisation réglable ou régulé.

7. Dispositif selon l'une quelconque des revendications 4 à 6, dans lequel le circuit d'entrée (11) est conçu pour assurer une limitation de la bande de base.

8. Dispositif selon l'une quelconque des revendications 4 à 6, dans lequel, pour la limitation de la bande de base, un filtre de détection (12) est placé entre le circuit d'entrée (11) et le comparateur (13).

9. Dispositif selon l'une quelconque des revendications 4 à 8, dans lequel, entre le mélangeur (17) et le régulateur (21) est placé un filtre passe-bas (18).

10. Dispositif selon l'une quelconque des revendications 4 à 9, dans lequel le régulateur (21) est un régulateur PI.

11. Dispositif selon l'une quelconque des revendications 4 à 10, dans lequel l'oscillateur optique local pouvant être commandé en fréquence et en phase (10) est un laser Néodyme-YAG.

Fig.1

Fig.2

Fig.3a

Fig.3b

Imaginärteil und Realteil der Spektrallinie bei f=1/Tb

Phasenfehler in rad ⟶

Fig.4a

Fig.4b

Fig.5